(19) Europäisches Patentamt
European Patent Office
Office européen des brevets

(11) **EP 4 109 871 B1**

(12) **EUROPEAN PATENT SPECIFICATION**

(45) Date of publication and mention
of the grant of the patent:
**20.05.2026 Bulletin 2026/21**

(21) Application number: **20919923.1**

(22) Date of filing: **21.02.2020**

(51) International Patent Classification (IPC):
*H04N 23/611* (2023.01)     *H04N 23/56* (2023.01)
*H04N 23/67* (2023.01)     *H04N 23/74* (2023.01)
*G06V 10/141* (2022.01)     *G06V 40/16* (2022.01)
*G06F 21/32* (2013.01)

(52) Cooperative Patent Classification (CPC):
**G06V 40/172; G06F 21/32; G06V 10/141;
G06V 40/171; H04N 23/56; H04N 23/611;
H04N 23/67; H04N 23/74;** G06V 10/82

(86) International application number:
**PCT/JP2020/007044**

(87) International publication number:
**WO 2021/166221 (26.08.2021 Gazette 2021/34)**

(54) **BIOMETRIC AUTHENTICATION DEVICE, BIOMETRIC AUTHENTICATION METHOD, AND COMPUTER-READABLE MEDIUM STORING PROGRAM THEREFOR**

BIOMETRISCHE AUTHENTIFIZIERUNGSVORRICHTUNG, BIOMETRISCHES AUTHENTIFIZIERUNGSVERFAHREN UND COMPUTERLESBARES MEDIUM MIT DARAUF GESPEICHERTEM PROGRAMM DAFÜR

DISPOSITIF D'AUTHENTIFICATION BIOMÉTRIQUE, PROCÉDÉ D'AUTHENTIFICATION BIOMÉTRIQUE ET SUPPORT LISIBLE PAR ORDINATEUR STOCKANT UN PROGRAMME ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.12.2022 Bulletin 2022/52**

(73) Proprietor: **NEC Corporation
108-8001 Tokyo (JP)**

(72) Inventor: **OAMI, Ryoma
Tokyo 108-8001 (JP)**

(74) Representative: **Betten & Resch
Patent- und Rechtsanwälte PartGmbB
Maximiliansplatz 14
80333 München (DE)**

(56) References cited:
WO-A1-2007/139085     JP-A- 2008 052 510
JP-A- 2013 250 856     JP-A- 2016 532 396
JP-A- 2017 503 276     JP-A- 2018 088 647
US-A1- 2009 016 574     US-A1- 2015 098 630
US-A1- 2016 277 648     US-A1- 2017 061 210
US-A1- 2018 276 465     US-A1- 2019 306 441

## Description

### Technical Field

The present disclosure relates to a biometric authentication apparatus, a biometric authentication method, and a computer-readable medium storing a program therefor.

### Background Art

Conventionally, a large number of schemes of recognizing a person using part of their body, such as a face or an iris, have been proposed. These schemes image a face or part of the face by a camera, extract information allowing the individual person to be identified, and check the person. For such an occasion, a light is disposed on an apparatus side, and imaging is performed with a subject being illuminated by the light. For example, in the case of the iris, images are often taken under near-infrared illumination. In the case of the face, in a situation with insufficient environment light, images are taken while illumination is applied. In this case, it is important to appropriately control lighting to obtain high-definition videos.

As a scheme of controlling lighting, for example, Patent Literature 1 discloses a scheme that identifies coordinates where a person (lighting target) serving as a lighting object resides in an illumination space, such as a banquet room or a hall, and controls an illumination direction and a quantity of light of lighting equipment disposed in an illumination space so as to illuminate the person, based on the coordinates. According to this scheme, a transmitter is attached to the person serving as the lighting target, and the coordinate position of the person in the illumination space is identified based on a signal emitted from the transmitter. Furthermore, the orientation of the person is acquired by image processing, and control depending on the orientation is also performed.

As a scheme of controlling near-infrared illumination in iris authentication, for example, Patent Literature 2 discloses a scheme of controlling lights disposed on both side of a camera. According to this scheme, images are taken with the lights on both sides of the camera being on simultaneously, and in another case, images are taken with the light on the either side being alternately turned on. Lighting on both the sides is for uniform illumination in cases of a person with the naked eye and a person wearing hard contact lenses. Lighting on one side is for preventing reflection of illumination on the lens surfaces of glasses from being on the iris in a case of a person wearing glasses.

According to this scheme, the distance from the camera to the subject is acquired based on optical pulses with which a face region of the subject is illuminated, and on the distance between the eyes of the subject captured by two cameras, and it is determined whether the eye position is in an in-focus range or not. Unfortunately, the acquired distance is used only to guide the subject into the in-focus range, but is not used to control the lights.

### Citation List

#### Patent Literature

Patent Literature 1: Japanese Unexamined Patent Application Publication No. 2000-260577
Patent Literature 2: Japanese Unexamined Patent Application Publication No. 2007-319174

WO2007139085A1, US2017061210A1 and US2018276465A1 are other examples of biometric authentication in which the lights are controlled for an optimum recognition of a user.

### Summary

#### Technical Problem

According to the scheme in Patent Literature 1, the lights are controlled depending on the coordinates of a person to be illuminated. However, measurement of the coordinates requires attaching a transmitter to the person, and also requires a receiver that receives a signal emitted from the transmitter. Accordingly, there is a problem in that the cost is high.

According to the scheme in Patent Literature 2, the distance from the camera to the subject is measured, but is not used to control the lights. In a situation where the distance between the camera and the subject largely varies, there is a problem in that the luminance of the lights becomes inappropriate.

The present disclosure has an object to provide a biometric authentication apparatus and a biometric authentication method that improve related techniques, and a computer-readable medium storing a program therefor.

Solution to Problem

The invention is set out in third and fourth example embodiments. Accordingly, the first and second example embodiments are not encompassed by the wording of the claims but are considered as useful for understanding the invention.

An aspect of a biometric authentication apparatus according to the present disclosure the features specified in appended claim 1.

An aspect of a biometric authentication method according to the present the features of appended claim 7.

An aspect of according to the present specifies a program as defined according to appended claim 8.

**Brief** Description of Drawings

Fig. 1 is a block diagram showing a configuration of a biometric authentication apparatus according to a first example embodiment;

Fig. 2 is a diagram showing an example of positional relationships among a camera, lights, and a subject with respect to the biometric authentication apparatus;

Fig. 3 is a diagram showing an example of positional relationships among the camera, the lights, and the subject with respect to the biometric authentication apparatus;

Fig. 4 is a block diagram showing a configuration of a biometric authentication apparatus according to a second example embodiment;

Fig. 5 is a block diagram showing a configuration of a biometric authentication apparatus according to a third example embodiment;

Fig. 6 is a block diagram showing a configuration of a biometric authentication apparatus according to a fourth example embodiment; and

Fig. 7 is a block diagram showing a hardware configuration of the biometric authentication apparatus according to the example embodiments.

**Example Embodiment**

Hereinafter, referring to the drawings, example embodiments of the present disclosure are described. To clarify illustration, in the following description and drawings, omission and simplification are appropriately made. The example embodiments related to a technique that estimates the distance to a subject to be biometrically authenticated, based on a detection result of the subject, automatically controls lighting and takes an image, and performs biometric authentication using the obtained image.

First Example Embodiment

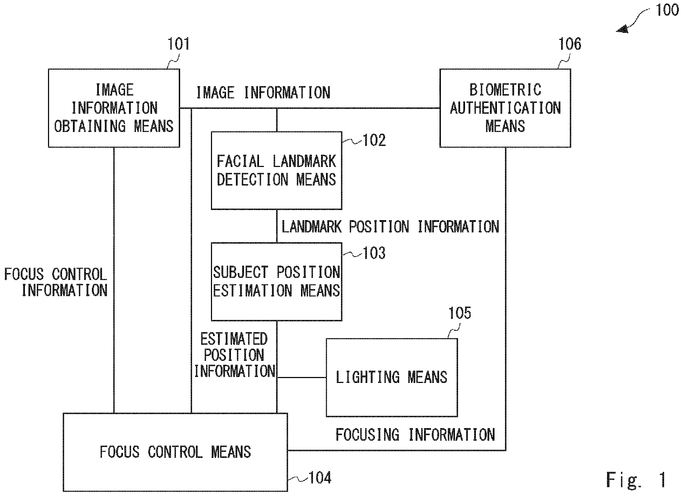

Fig. 1 is a block diagram showing the configuration of a biometric authentication apparatus according to a first example embodiment. Referring to Fig. 1, the biometric authentication apparatus 100 includes image information obtaining means 101, facial landmark detection means 102, subject position estimation means 103, focus control means 104, lighting means 105, and biometric authentication means 106.

The image information obtaining means 101 obtains image information on a subject to be biometrically authenticated, and outputs the image information to the facial landmark detection means 102, the focus control means 104 and the biometric authentication means 106. The image information obtaining means 101 takes an image of a person serving as the subject, for example.

The facial landmark detection means 102 detects a landmark part of a face from the image information output from the image information obtaining means 101, generates landmark position information, and outputs the landmark position information to the subject position estimation means 103.

The subject position estimation means 103 estimates the spatial position of the subject from the landmark position information output from the facial landmark detection means 102, and generates estimated position information that includes subject distance information representing the distance to the subject. Here, the spatial position of the subject includes at least the distance from the image information obtaining means 101 to the subject, and may include the position from a certain point in the space in the horizontal direction and the vertical direction. The generated estimated position information is output to the focus control means 104 and the lighting means 105.

The focus control means 104 generates focus control information for controlling the focus of the image information obtaining means 101, based on the estimated position information output from the subject position estimation means 103. The focus control information is output to the image information obtaining means 101. The focus control means 104 determines whether an image is in focus or not based on the image information output from the image information obtaining means 101, and generates focusing information that represents whether it is in focus or not, and outputs the generated information to the biometric authentication means 106.

The lighting means 105 generates information for controlling a light, based on the estimated position information output from the subject position estimation means 103, and adjusts the luminance at which the subject is illuminated based on the information. Note that the light may be installed at least one point. Alternatively, lights may be respectively installed at multiple points. One example of the light is a Light Emitting Diode (LED), a near-infrared light source, a lamp, or another light emitting device capable of controlling the luminance.

When the focusing information output from the focus control means 104 indicates the image is in focus, the biometric authentication means 106 performs biometric authentication using the image information output from the image information obtaining means 101, and generates an authentication result. The biometric authentication encompasses biometric authentication using the entire or part of a face or a head. For example, face authentication, iris authentication, authentication in a region around an eye, ear authentication and the like are encompassed.

Next, each configuration element of the biometric authentication apparatus 100 in Fig. 1 is described in detail.

The image information obtaining means 101 may be anything capable taking an image of a part used for the biometric authentication described above at a resolution and an image quality that allow the authentication. As the image information obtaining means 101, for example, a USB camera, an IP camera, a web camera, a CCTV camera or the like may be adopted. Note that in a case of biometric authentication using near-infrared light (iris authentication etc.), the image information obtaining means 101 is required to be capable of taking an image in a near-infrared region at a resolution and an image quality that are required for the biometric authentication.

The image information obtaining means 101 has a mechanism that adjusts the focus depending on the distance to the subject. As the mechanism, any mechanism conventionally adopted for autofocus can be used. A new device, such as a liquid lens, having been used in recent years may be adopted.

The image information obtaining means 101 allows the focus to be controlled from the outside. The focus is controlled according to the focus control information input from the focus control means 104. For example, in a case of a scheme of controlling the focus by rotating a focus ring, the rotation angle of the focus ring for adjusting the distance of the lens, or the rotation angle of a focus motor used to rotate the focus ring are included in the focus control information. In the case of a liquid lens, the focus control information includes control voltage information on the liquid lens. The image information obtaining means 101 changes the control voltage for the liquid lens to a designated value, and obtains an image.

In the facial landmark detection means 102, face detection or head detection is performed using input image information, and the position of a landmark part included in the face or the head is acquired. Here, the landmark indicates a characteristic part (hereinafter, also simply called a feature point) included in the face or the head. For example, the landmark may be a pupil, the tip of a nose, or a corner of an eye. However, the landmark is not limited to these examples.

Detection of the face or the head and the landmark part that is included in them can be performed using a detector having leaned the features of the face, head and the part. For example, a detector that extracts Histograms of Oriented Gradients (HOG) features and performs detection based on the extracted features, or a detector that performs detection directly from an image using a Convolutional Neural Network (CNN) may be used.

Here, position information (position coordinates on the image) only on a feature point used to estimate the position of the subject in the subject position estimation means 103 among multiple landmarks may be acquired. Here, the estimated position of the subject includes at least the distance from the camera to the subject (hereinafter, called a subject distance).

In a case where the subject position to be estimated is only the subject distance, the facial landmark detection means 102 may be configured to detect only a landmark required to acquire this. For example, in a case of estimating the distance to the subject based on an interocular distance, i.e., the distance between the pupils of both the eyes, the facial landmark detection means 102 adopts the pupils of both the eyes as feature points, and acquires the positions of these points. Alternatively, the facial landmark detection means 102 may acquire the positions of other feature points of the eyes (the inner corners or outer corners of the eyes) instead of the positions of the pupils, and use the distance between these feature points instead of the interocular distance. Alternatively, the facial landmark detection means 102 may use the distances to the other feature points, such as a nose or a mouth instead of eyes. In this case, the positions of the feature points to be used may be acquired.

On the other hand, in a case where the estimated subject position also includes the position from a certain point in the space (e.g., the center of the optical axis of the camera) in the horizontal and vertical directions besides the subject distance, the facial landmark detection means 102 may be configured to detect only landmarks required to calculate these values. The subject position estimation means 103 estimates the position of the subject from the generated position information on the landmarks.

If it is assumed that the individual differences in sizes of faces of people are not large, the subject distance in the generated position information on the subject can be roughly estimated from the distance between the positions of the feature points. As described above, various feature points can be used. Hereinafter, a case is described that uses the pupils of both the eyes as the feature points, and acquires the distance to the subject using the interocular distance, i.e., the distance between the pupils.

It may be configured such that the subject position estimation means 103 preliminarily acquires a relational expression between the interocular distance and the subject distance, and acquires the distance to the subject, based on the relational expression. In other words, provided that the interocular distance is d, and the distance to the subject to be estimated is $D_E$, the relational expression can be represented as Expression (1).

[Expression 1]

$$D_E = f(d) \quad \cdot \cdot \cdot \quad (1)$$

A function f(d) may be preliminarily acquired, and used to estimate the distance to the subject. For example, the function f(d) may be approximated by a line acquired by linear regression, or acquired by applying a polynomial or another expression. Alternatively, the function f(d) may be represented by combining what is approximated on an interval-by-interval basis. The subject distance acquired as described above is output as the estimated position information.

The subject position estimation means 103 may acquire what degree the face deviates from the image center. This can also be acquired using position information on the landmarks of the face. For example, the subject position estimation means 103 can obtain what degree the center of the face deviates on the image in the horizontal and vertical directions from the coordinates of each pupil of the eye on the image, convert the deviation into the distance in the space, and obtain the subject position.

This is because the distance between the landmarks of the face (e.g., the interocular distance) roughly has a predetermined value (about 6.5 cm in the case of the interocular distance (the distance between pupils)) albeit individual differences. Specifically, the subject position estimation means 103 can acquire what degree of length in a real space one pixel corresponds to, from the number of pixels of the interocular distance, and convert the coordinate position on the image into the positional deviation in the space. Also deviation information on the subject in the real space in the vertical and lateral directions acquired as described above may be included in the estimated position information.

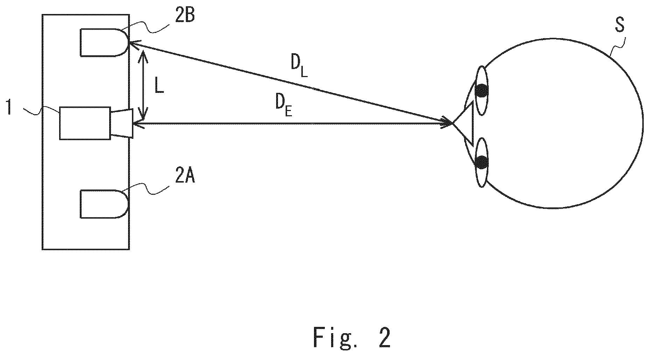

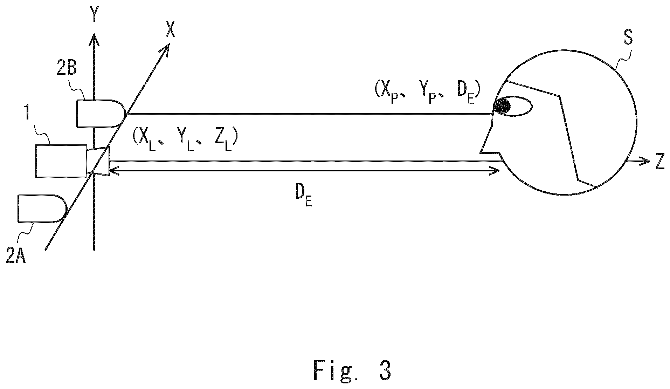

The deviation information on the subject is described with reference to Figs. 2 and 3. Figs. 2 and 3 are diagrams showing an example of the positional relationship among a camera 1 of the image information obtaining means 101, lights 2A and 2B of the lighting means 105, and a subject S in the biometric authentication apparatus 100. Fig. 2 is a diagram of the biometric authentication apparatus 100 viewed from above. Fig. 2 shows a case where the center of the face of a person and the optical axis of the camera coincide with each other. Fig. 3 is a diagram with a coordinate system being configured in which the center of the camera is adopted as the origin and which has a Z-axis in the depth direction, an X axis in the lateral direction on a plane perpendicular to the Z-axis, and a Y-axis in the vertical direction. Fig. 3 shows a case where the center of the face of the person and the optical axis of the camera deviate from each other (i.e., the optical axis of the camera does not face the center of the face of the person).

In the example shown in Figs. 2 and 3, the lights 2A and 2B are disposed on the both sides of the camera 1. As shown in Fig. 3, for example, the biometric authentication apparatus 100 may estimate the value of deviation $(X_P, Y_P)$ of the center of the face from the Z-axis, and includes the value, with the subject distance $D_E$, in the estimated position information. The acquired estimated position information is output to the focus control means 104 and the lighting means 105. Note that the disposition and the number of lights 2A and 2B shown in Figs. 2 and 3 are only an example. According to one modification example, not shown, multiple lights may be disposed on either side of the camera 1. The numbers of lights disposed on either side of the camera 1 are not necessarily identical to each other.

The focus control means 104 generates focus control information for controlling the focus of the image information obtaining means 101, based on the subject distance information included in the estimated position information, and outputs the generated information to the image information obtaining means 101. In other words, the focus control means 104 generates information for adjusting the lens of the camera 1 so that the image is in focus at the estimated subject distance.

Note that there are individual differences in the distance between the landmarks (feature points) of the faces, such as the interocular distance. Accordingly, the estimated subject distance possibly slightly deviates from the actual distance. Accordingly, in a search mode for searching for the in-focus position of the taken image, the focus control means 104 may adopt the estimated subject distance as a reference, and search for a position in which the image is in focus before and after the reference. In this case, the focus control means 104 calculates the focusing indicator that represents the in-focus degree in a predetermined region on the taken image. When the focusing indicator satisfies a predetermined condition and it is determined that the taken image is in focus, the focus control means 104 transitions to an in-focus mode for maintaining the in-focus state at the in-focus position.

Here, the focusing indicator is, for example, a value of evaluating the power of a high-frequency component of the image, and the degree of an edge component. The more precisely the image becomes in focus, the higher the value is. There are various schemes of determining whether the image is in focus or not using the focusing indicator. For example, it may be determined that the image is in focus when the focusing indicator exceeds a predetermined threshold. Alternatively, images may be taken while the focus is shifted by controlling the focal point, focusing indicators for the respective images may be obtained, a point of a local maximum may be acquired, and the in-focus state may be determined.

Note that the focus control means 104 may hold the previously input estimated position information on the subject, control may be performed so that when the input estimated position information is largely changed, the mode transitions to the search mode for searching the focus again. Accordingly, even when the subject moves, it can appropriately focus on the subject.

When it is determined that the obtained image is in focus, i.e., when the focusing indicator satisfies the predetermined condition, the focus control means 104 outputs the focusing information that indicates the image is in focus. Note that when the obtained image is out of focus, information representing that the image is not in focus (i.e., information representing that the in-focus position is being searched for) may be output as focusing information. The focusing information may be output to the biometric authentication means 106.

The lighting means 105 acquires the positional relationship between the subject S and the lights 2A and 2B in the real space, based on the estimated position information, and controls the luminances of the lights according to the result. Based on the subject distance, the lighting means 105 can control the lights so that the larger the subject distance is, the higher the luminances are. For example, the quantity of light per unit area is inversely proportional to the square of subject distance. Accordingly, the lighting means 105 controls the lights, based on the expression (2).

[Expression 2]

$$I = \frac{A}{D_L{}^2} \quad \cdots \quad (2)$$

Here, I indicates the intensity of illumination, and A indicates a constant. $D_L$ indicates the distance from the light 2B to the center of the face of the subject S, and is determined by the subject distance $D_E$ and the distance L between the camera and the light. As shown in Fig. 2, provided that the distance from the camera 1 to the light 2B is L, $D_L$ is represented by the expression (3).

[Expression 3]

$$D_L = \sqrt{D_E{}^2 + L^2} \quad \cdots \quad (3)$$

Note that in the example, shown in Fig. 2, the distance from the light 2A to the center of the face of the subject S is equal to the distance from the light 2B to the center of the face of the subject S.

As shown in Fig. 3, when the estimated position information includes a deviation, the lighting means 105 may consider the deviation. In other words, the lighting means 105 may obtain the distance from each light to the subject also in consideration of the deviation information, and control the luminance of the lights according to the distance. Provided that the position of the light 2B is $(X_L, Y_L, Z_L)$, the distance from the light to the face is represented by the expression (4).

[Expression 4]

$$D_L = \sqrt{(D_E - Z_L)^2 + (X_L - X_P)^2 + (Y_L - Y_P)^2} \quad \cdots \quad (4)$$

The lighting means 105 controls the luminance of the light according to the distance. Specifically, as described above, the lighting means 105 controls the light based on the subject distance so that the longer the distance from each light source of illumination to the subject is, the brighter the lights are. Accordingly, even when the position of the subject deviates laterally and vertically, the subject can be appropriately illuminated.

Note that any scheme of controlling the luminance of the illumination may be adopted. For example, the lighting means 105 may change the luminance by changing the rate of electric current allowed to flow to the lights, or by turning on and off the lights at a high frequency and changing the widths of the on and off time periods (Pulse Width modulation (PWM) control). Alternatively, in a case where multiple lights are disposed at the same position, the lighting means 105 may change the luminance by changing the number of lights to be turned on. Further alternatively, the lighting means 105 may control the wide angle and narrow angle of the illumination light using an auxiliary component, such as a reflector, according to the distance from the light source of illumination to the subject. In other words, the lighting means 105 narrows the diffusion of illumination from the lights as the distance from the light source of illumination to the subject is large, and widens the diffusion of illumination from the lights as the distance from the light source of illumination to the subject is small. Alternatively, the lighting means 105 may use a combination thereof, or any other lighting control method.

The biometric authentication means 106 performs biometric authentication using the image information output from the image information obtaining means 101, and generates an authentication result. Specifically, the biometric authentication means 106 extracts the feature according to the scheme of biometric authentication to be applied, from the input image. The biometric authentication means 106 performs comparison with preliminarily registered features of people, and determines who is the person to be biometrically authenticated, or whether no one matches. For example, in a case of iris authentication, the biometric authentication means 106 crops an eye region from the selected image, and extracts the feature of the iris. The biometric authentication means 106 then executes comparison between the extracted feature and the preliminarily registered features of irises, and generates an authentication result.

As described above, according to the first example embodiment, without use of another device, such as a ranging sensor, only the image used for biometric authentication is used, and the position of the face of the subject to be biometrically authenticated can be estimated. By controlling the focus of the camera and the luminances of the lights in conformity with the estimated position of the subject, an in-focus image with illumination at an appropriate luminance can be obtained even when the position of the face slightly deviates vertically and laterally, and the accuracy of biometric authentication can be improved.

Second Example Embodiment

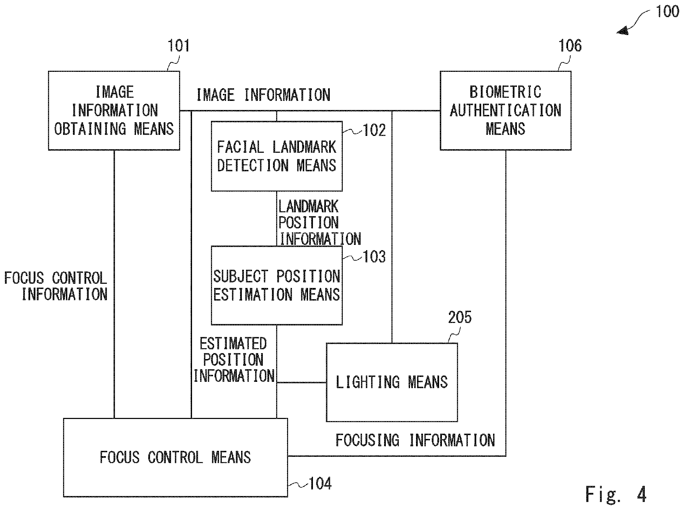

Fig. 4 is a block diagram showing the configuration of a biometric authentication apparatus according to a second example embodiment. Referring to Fig. 2, the biometric authentication apparatus 100 includes image information obtaining means 101, facial landmark detection means 102, subject position estimation means 103, focus control means 104, lighting means 205, and biometric authentication means 106. In Fig. 4, in comparison with Fig. 1, the lighting means 205 is provided instead of the lighting means 105. Other points are analogous.

The lighting means 205 receives, the estimated position information output from the subject position estimation means 103, and the image information output from the image information obtaining means 101. The lighting means 205 generates information for controlling the lights based on the estimated position information and the image information, and adjusts the luminances of the lights that illuminate the subject based on the generated information.

Next, the lighting means 205 of the biometric authentication apparatus 100 in Fig. 4 is described in detail. Note that the configuration elements other than the lighting means 205 are similar to those in Fig. 1. Accordingly, the description thereof is omitted.

The lighting means 205 generates information for controlling the lights, using the image information output from the image information obtaining means 101 in addition to the estimated position information output from the subject position estimation means 103. First, similar to the lighting means 105 in Fig. 1, the luminance is adjusted according to the estimated position information. Next, when the image information taken under adjusted illumination is input from the image information obtaining means 101, the lighting means 205 analyzes the luminance of the subject.

The lighting means 205 then compares the analyzed luminance with the assumed luminance, and controls to reduce the luminance when the subject is too bright, and controls to increases the luminance when the subject is too dark. The determination of luminance may be performed by, for example, obtaining the distribution of pixel values of the image, comparing the representative value thereof with the assumed value, and making the determination of whether the representative value is larger or not. Any of various values, such as the average value, mode, median, maximum value, minimum value, and a specific percentile value, can be used as the representative value. Alternatively, the lighting means 205 may compare the distribution itself of the pixel values of the image with an assumed distribution, and control the lights so as to increase the similarity between the distributions.

The landmark position information output from the facial landmark detection means 102 may further be input into the lighting means 205. The lighting means 205 may apply the analysis described above only to the subject region identified by the landmark position information in a limited manner, and adjust the luminances of the lights. Accordingly, the biometric authentication apparatus 100 can more appropriately control the luminances of the lights, and obtain a high-quality biometric feature amount.

Third Example Embodiment

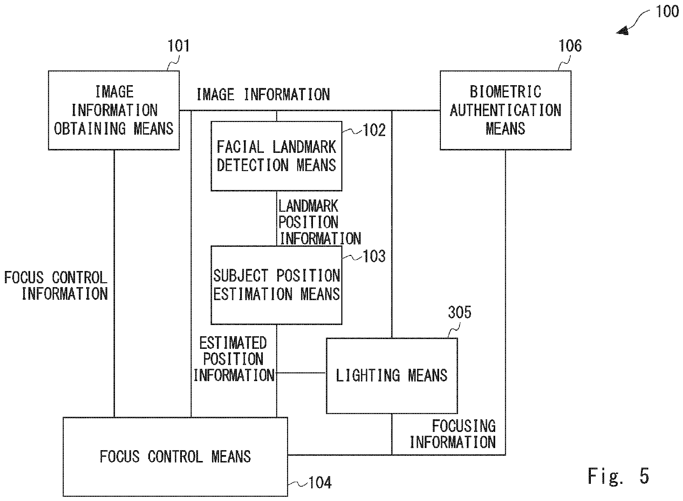

Fig. 5 is a block diagram showing a configuration of a biometric authentication apparatus 100 according to a third example embodiment. Referring to Fig. 5, the biometric authentication apparatus 100 includes image information obtaining means 101, facial landmark detection means 102, subject position estimation means 103, focus control means 104, lighting means 305, and biometric authentication means 106. In Fig. 5, in comparison with Fig. 4, the lighting means 305 is provided instead of the lighting means 205. Other points are similar to those in Fig. 4.

The lighting means 305 receives, the estimated position information output from the subject position estimation means 103, the image information output from the image information obtaining means 101, and focusing information output from the focus control means 104. The lighting means 305 generates information for controlling the lights, based on the estimated position information, the image information and the focusing information, and adjusts the luminances of the lights that illuminates the subject, based on the generated information. Note that in the case of the third example embodiment, it is assumed that the lights are installed in at least two points as shown in Figs. 2 and 3, for example.

Next, the lighting means 305 of the biometric authentication apparatus 100 in Fig. 5 is described in detail. Note that the configuration elements other than the lighting means 305 are similar to those in Fig. 1. Accordingly, the description thereof is omitted.

The lighting means 305 controls the lights, using the estimated position information output from the subject position estimation means 103 and the image information output from the image information obtaining means 101, and further using the focusing information output from the focus control means 104. Specifically, the lighting means 305 executes different controls between the case where the focus control means 104 is in the search mode of searching for the in-focus position, and the case where the focus control means 104 is in the in-focus mode of maintaining the in-focus position.

More specifically, when the focusing information does not indicate the in-focus state in the state where the focus control means 104 is searching for the in-focus position, the lighting means 305 executes lighting control similar to that of the lighting means 205. In other words, the lighting means 305 adjusts the luminances of the lights 2A and 2B independently or dependently according to the estimated position information while letting both the lights 2A and 2B on. On the other hand, when the focusing information indicates the in-focus state, the lighting means 305 takes an image while controlling lighting of the multiple lights according to a predetermined lighting pattern, as described below.

For example, as shown in Figs. 2 and 3, in the case where the lights 2A and 2B are disposed on the both sides of the camera 1, the lighting means 305 may alternately turn on the lights. In other words, the lighting means 305 turns on the one light 2A at certain timing, and turns on the other light 2B at other timing. This can prevent reflection of glasses or the like from being on the eyes of the subject and disturbing obtainment of the features of the eyes and therearound.

In this case, the lighting means 305 may control the lighting pattern of the lights in consideration of the deviation of the subject position from the center of the image. Reflection of light can be prevented from being on the regions of the eyes in a case where the illumination of the lights reaches the glasses obliquely. Accordingly, only the opposite light in the direction of deviation of the subject position from the center of the image may be turned on.

For example, in the example in Fig. 3, the position of the face of the subject S deviates toward the light 2B. Accordingly, the light 2B may be turned off and only the light 2A may be turned on. As described above, by controlling the lighting pattern in the in-focus state, light reflected by the glasses can be prevented from being on the iris regions of the eyes in a case where the person wears the glasses, and a high-quality iris image can be taken even with the glasses being on. By intentionally changing the lighting pattern of the lights and taking images, there is also an advantage of facilitating determination of whether someone impersonates a person or not.

Fourth Example Embodiment

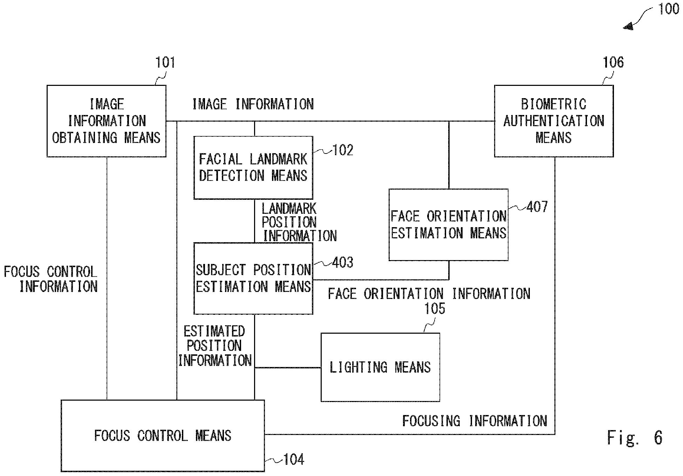

Fig. 6 is a block diagram showing a configuration of a biometric authentication apparatus 100 according to a fourth example embodiment. Referring to Fig. 6, the biometric authentication apparatus 100 includes image information obtaining means 101, facial landmark detection means 102, subject position estimation means 403, focus control means 104, lighting means 105, biometric authentication means 106, and face orientation estimation means 407. In Fig. 6, in comparison with Fig. 1, the subject position estimation means 403 is provided instead of the subject position estimation means 103, and the face orientation estimation means 407 is further provided. The other points are similar to those in Fig. 1.

The image information output from the image information obtaining means 101 is input into the face orientation estimation means 407. The face orientation estimation means 407 analyzes the image information, estimates the orientation of the face, and outputs face orientation information to the subject position estimation means 403. The subject position estimation means 403 generates estimated position information, based on the landmark position information output from the facial landmark detection means 102 and the face orientation information output from the face orientation estimation means 407, and outputs the generated information to the focus control means 104 and the lighting means 105.

Next, the subject position estimation means 403 and the face orientation estimation means 407 of the biometric authentication apparatus 100 in Fig. 6 are described in detail. Note that the configuration elements other than the subject position estimation means 403 and the face orientation estimation means 407 are similar to those in Fig. 1. Accordingly, the description thereof is omitted.

The face orientation estimation means 407 analyzes the input image, and calculates the orientation of the face. In other words, the degree of deviation of the orientation in the vertical direction and the lateral direction with reference to the frontal orientation is calculated. The orientation of the face can be determined using a determination unit having preliminarily achieved learning for every orientation of the face. The calculated face orientation information is output to the subject position estimation means 403.

In a case where the face orientation information indicates the front, the subject position estimation means 403 acquires the estimated position information similarly to that of the subject position estimation means 103. On the other hand, when the orientation of the face is not front, the subject position estimation means 403 can correct the landmark position information in consideration of the orientation, and acquire the estimated position information using the corrected landmark position information.

For example, in a case where the positions of eyes are used as landmarks, and the subject distance is calculated from the interocular distance, the subject position estimation means 403 corrects the interocular distance using the face orientation information. For example, the face is oriented in an obliquely lateral direction, the obtained interocular distance is shorter than the actual distance. In this case, the subject position estimation means 403 corrects the landmark position information in consideration of the inclination of the face.

Specifically, provided that the rotation angle in the lateral direction is $\theta$, the distance value to the subject can be acquired using the corrected interocular distance d' indicated by the expression (5) instead of the interocular distance d.
[Expression 5]

$$d' = \frac{d}{\cos \theta} \quad \cdot \ \cdot \ \cdot \quad (5)$$

As described above, even in the case where the orientation of the face is not front, the lights can be more appropriately controlled by executing correction in consideration of the case.

The face orientation information obtained by the face orientation estimation means 407 may be input into the lighting means 105. The reflectance of light is changed depending on the orientation of the face, and the luminance of the subject can be changed. Accordingly, the luminance of the lights can be controlled in consideration of the orientation of the face.

Note that the correction of the landmark position information based on the face orientation information described above can be applied also to the biometric authentication apparatuses 100 in Figs. 4 and 5. In other words, it is only required that the subject position estimation means 403 is provided instead of the subject position estimation means 103, and the face orientation estimation means 407 is added.

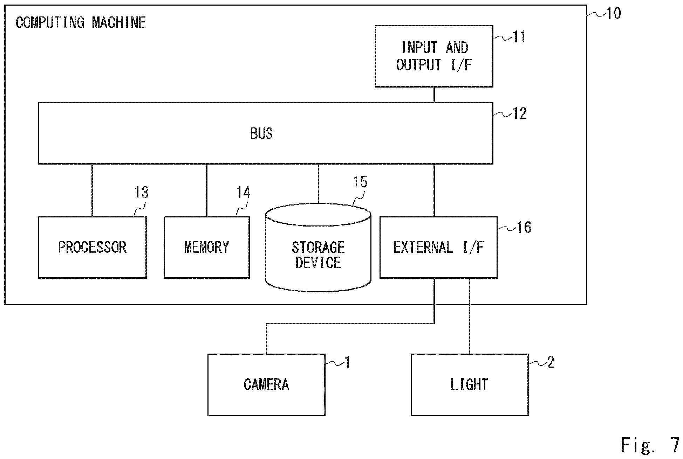

Fig. 7 is a block diagram showing the hardware configuration of the biometric authentication apparatus according to the example embodiments. Referring to Fig. 7, the biometric authentication apparatus 100 according to the example embodiments is achieved by a computing machine 10, a camera 1, and a light 2. The computing machine 10 is any computing machine, such as a personal computer (PC), a server machine, a tablet terminal, a smartphone or the like, for example. The computing machine 10 may be a dedicated computing machine designed to achieve the biometric authentication apparatus 100, or a general-purpose computing machine.

The computing machine 10 includes an input and output interface 11, a bus 12, a processor 13, a memory 14, a storage device 15, and an external interface 16. The bus 12 is a data transmission path for allowing the processor 13, the memory 14, the storage device 15, the input and output interface 11 and the external interface 16 to transmit and receive data to and from each other. Note that the method of connecting the processor 13 and the like to each other is not limited to the bus connection.

The processor 13 is any of various processors, such as a Central Processing Unit (CPU), a Graphics Processing Unit (GPU) or a Field-Programmable Gate Array (FPGA). The memory 14 is a main memory device achieved using a Random Access Memory (RAM) and the like. The storage device 15 is an auxiliary memory device achieved using a hard disk, a Solid State Drive (SSD), a memory card, a Read Only Memory (ROM) or the like.

The input and output interface 11 is an interface for connecting the computing machine 10 and input and output devices to each other. For example, input apparatuses, such as a keyboard, and output apparatuses, such as a display apparatus, are connected to the input and output interface 11.

The external interface 16 is an interface for connecting the computing machine 10 to other devices. For example, the interface is a Universal Serial Bus (USB), IEEE 1394 and the like, and is connected to the camera 1 and the light 2. The computing machine 10 can control the light 2 and perform data communication with the camera 1, via the external interface 16. The light 2 corresponds to the lighting means 105, 205 and 305 of the biometric authentication apparatus 100, and the camera 1 corresponds to the image information obtaining means 101.

The storage device 15 stores program modules for respectively achieving pieces of means of the biometric authentication apparatus 100. The processor 13 reads the program modules to the memory 14 and executes the program modules, thereby achieving functions corresponding to the respective program modules.

Note that some functions of the biometric authentication apparatus 100 may be executed on the camera 1 side. In other words, the processor, the storage device and the memory may be stored in the camera 1. All or some of the processes of the pieces of means of the biometric authentication apparatus 100 may be achieved using these configuration elements.

For example, the processes of the image information obtaining means 101 and the focus control means 104 may be executed on the camera 1 side, the other processes may be executed on the computing machine 10 side. Alternatively, the process of the facial landmark detection means 102 may also be executed on the camera 1 side, and the other processes may be executed on the computing machine 10 side. Further alternatively, all the processes other than those of the lighting means 105 and the biometric authentication means 106 may be executed on the camera 1 side.

The programs according to the present example embodiment may be programs that cause a computer to execute the processes described above. In the examples described above, the programs are stored using various types of non-transitory computer-readable medium, and can be supplied to the computer. The non-transitory computer-readable medium include various types of tangible storage media. Examples of the non-transitory computer-readable medium include a magnetic recording medium (e.g., a flexible disk, a magnetic tape, and a hard disk drive), a magnetooptical recording medium (e.g., a magnetooptical disk), a Read Only Memory (CD-ROM), a CD-R, a CD-R/W, a semiconductor memory (e.g., a mask ROM, a Programmable ROM (PROM), an Erasable PROM (EPROM), a flash ROM, and a Random Access Memory (RAM)). The programs may be provided for the computer through various types of transitory computer readable medium. Examples of transitory computer readable medium include an electric signal, an optical signal, and electromagnetic waves. The transitory computer readable medium can provide programs for the computer via a wired communication path, such as an electric wire or an optical fiber, or a wireless communication path.

As described above, according to each example embodiment, even without the sensor of measuring the distance to the subject to be biometrically authenticated, the focus of the camera is achieved in conformity with the position of the subject, the lights are appropriately controlled, and biometric authentication can be executed.

The present disclosure can provide the biometric authentication apparatus and the biometric authentication method that are capable of controlling the focus of the camera and the lights in conformity with the position of the subject to be biometrically authenticated, and inexpensively obtaining high-quality biometric features without using another device, such as a ranging sensor, and the program therefor.

Note that the present disclosure is not limited to the example embodiments described above. New example embodiments to which such change and improvement have been applied can be encompassed in the technical scope of the present disclosure which is defined in the appended Claims.

**Reference Signs List**

100 BIOMETRIC AUTHENTICATION APPARATUS
101 IMAGE INFORMATION OBTAINING MEANS
102 FACIAL LANDMARK DETECTION MEANS
103 SUBJECT POSITION ESTIMATION MEANS
104 FOCUS CONTROL MEANS
105 LIGHTING MEANS
106 BIOMETRIC AUTHENTICATION MEANS
205 LIGHTING MEANS
305 LIGHTING MEANS
403 SUBJECT POSITION ESTIMATION MEANS
407 FACE ORIENTATION ESTIMATION MEANS
10 COMPUTING MACHINE
11 INPUT AND OUTPUT INTERFACE
12 BUS
13 PROCESSOR
14 MEMORY
15 STORAGE DEVICE
16 EXTERNAL INTERFACE
1 CAMERA
2, 2A, 2B LIGHT
S SUBJECT

**EP 4 109 871 B1**

**Claims**

1. A biometric authentication apparatus comprising:

image information obtaining means (101) for obtaining image information on a subject to be biometrically authenticated;
facial landmark detection means (102) for detecting a landmark part of a face from the image information obtained by the image information obtaining means (101), and generating position information about the landmark part;
subject position estimation means (103; 403) for estimating a spatial position of the subject from the position information on the landmark generated by the facial landmark detection means (102), and generating estimated position information that includes subject distance information representing a distance to the subject;
focus control means (104) for determining whether an image is in focus or not based on the image information obtained by the image information obtaining means (101), generating focusing information that represents whether the image is in focus or not, and controlling the focus of the image information obtaining means (101), based on the estimated position information; and
lighting means (305) for controlling luminance of a light that illuminates the subject, based on the estimated position information,
wherein the lighting means (305) includes lights (2A, 2B) disposed at both sides of a camera (1) of the image information obtaining means (101), and the lighting means (305) controls the lights (2A, 2B) differently between the case where the focusing information is an in-focus state and the case where the focusing information is not the in-focus state,
in the case where the focusing information indicates the in-focus state, the lighting means (305) controls lighting of the lights (2A, 2B) according to a predetermined lighting pattern, and
in the case where the focusing information indicates not the in-focus state, the lighting means (305) controls the lighting of the lights (2A,2B) so that the larger the subject distance is, the higher the luminance is, and
the biometric authentication apparatus comprising:
biometric authentication means (106) for performing biometric authentication using the image information illuminated by the predetermined lighting pattern obtained by the image information obtaining means (101), when the focusing information indicates that the image is in focus.

2. The biometric authentication apparatus according to Claim 1, wherein

the focus control means (104) is configured, in a search mode, to adopt the estimated subject distance as a reference, and search for an in-focus position in which the image obtained by the image information obtaining means (101) is in focus before and after the reference,
the lighting means (305) is configured, when the focus control means (104) is being in the search mode, and the focusing information indicates not the in-focus state, to control the light so that the larger the subject distance is, the higher the luminance is.

3. The biometric authentication apparatus according to Claim 1 or 2, wherein

the estimated position information further includes information representing a deviation of the subject, and
the lighting means (105) controls the luminance of the light, further using the deviation information on the estimated position information.

4. The biometric authentication apparatus according any one of Claims 1 to 3, wherein the lighting means (305) obtains a distribution of pixel values of the image information obtained by the image information obtaining means (101), and adjusts the luminance by comparing a representative value with an assumed value.

5. The biometric authentication apparatus according to any one of Claims 1 to 4, wherein the lighting means (305) controls the lighting pattern further using deviation information on a position of the subject included in the estimated position information,
wherein the lighting pattern is that a light, among the lights (2A, 2B), toward which the position of the subject is deviated is turned off.

6. The biometric authentication apparatus according to any one of Claims 1 to 5, further comprising

face orientation estimation means (407) for analyzing the image information obtained by the image information obtaining means (101), and obtaining face orientation information on the subject,
wherein the subject position estimation means (403) corrects the subject distance included in the estimated position information, based on the face orientation information obtained by the face orientation estimation means (407).

7. A biometric authentication method comprising:

obtaining image information on a subject to be biometrically authenticated;
detecting a landmark part of a face from the obtained image information, and generating position information about the landmark part;
estimating a spatial position of the subject from the generated position information on the landmark, and generating estimated position information that includes subject distance information representing a distance to the subject;
determining whether an image is in focus or not based on the obtained image information, generating focusing information that represents whether the image is in focus or not, and controlling the focus of means for obtaining the image information based on the estimated position information; and
controlling luminance of a light that illuminates the subject, based on the estimated position information,
wherein lights (2A, 2B) disposed at both sides of a camera (1) of the image information obtaining means (101) are controlled differently between the case where the focusing information is an in-focus state and the case where the focusing information is not the in-focus state,
in the case where the focusing information indicates the in-focus state, controlling lighting of the lights (2A, 2B) according to a predetermined lighting pattern, and
in the case where the focusing information indicates not the in-focus state, controlling the lighting of the lights (2A, 2B) so that the larger the subject distance is, the higher the luminance is, and
the method further comprising:
performing biometric authentication using the obtained image information_illuminated by the predetermined lighting pattern, when the focusing information indicates that the image is in focus.

8. A program having instructions that cause a biometric authentication apparatus according to claim 1 to execute the method according to claim 7.


**Patentansprüche**

1. Biometrische Authentifizierungsvorrichtung, umfassend:

Bilderfassungsmittel (101) zum Erhalten von Bildinformationen über ein biometrisch zu authentifizierendes Subjekt;
Gesichtsmerkmals-Erkennungsmittel (102) zum Erkennen eines Merkmalsanteils eines Gesichts aus den durch die Bilderfassungsmittel (101) erhaltenen Bildinformationen und zum Erzeugen von Positionsinformationen über den Merkmalsanteil;
Subjektpositions-Schätzmittel (103; 403) zum Schätzen einer räumlichen Position des Subjekts aus den durch die Gesichtsmerkmals-Erkennungsmittel (102) erzeugten Positionsinformationen über das Merkmal und zum Erzeugen von geschätzten Positionsinformationen, die Subjektabstands-Informationen enthalten, welche einen Abstand zu dem Subjekt darstellen;
Fokussteuerungsmittel (104) zum Bestimmen, ob ein Bild im Fokus ist oder nicht, basierend auf den durch die Bilderfassungsmittel (101) erhaltenen Bildinformationen, zum Erzeugen von Fokussierungsinformationen, die darstellen, ob das Bild im Fokus ist oder nicht, und zum Steuern des Fokus der Bilderfassungsmittel (101) basierend auf den geschätzten Positionsinformationen; und
Beleuchtungsmittel (305) zum Steuern der Leuchtdichte eines Lichts, welches das Subjekt beleuchtet, basierend auf den geschätzten Positionsinformationen,
wobei die Beleuchtungsmittel (305) Leuchten (2A, 2B) aufweisen, die an beiden Seiten einer Kamera (1) der Bilderfassungsmittel (101) angeordnet sind, und die Beleuchtungsmittel (305) die Leuchten (2A, 2B) zwischen dem Fall, in dem die Fokussierungsinformationen einen fokussierten Zustand angeben, und dem Fall, in dem die Fokussierungsinformationen nicht den fokussierten Zustand angeben, unterschiedlich steuern,
wobei in dem Fall, in dem die Fokussierungsinformationen den fokussierten Zustand angeben, die Beleuchtungsmittel (305) die Beleuchtung der Leuchten (2A, 2B) gemäß einem vorbestimmten Beleuchtungsmuster steuern, und

in dem Fall, in dem die Fokussierungsinformationen nicht den fokussierten Zustand angeben, die Beleuchtungsmittel (305) die Beleuchtung der Leuchten (2A, 2B) so steuern, dass die Leuchtdichte umso höher ist, je größer der Subjektabstand ist, und

die biometrische Authentifizierungsvorrichtung umfasst:

biometrische Authentifizierungsmittel (106) zum Durchführen einer biometrischen Authentifizierung unter Verwendung der durch das vorbestimmte Beleuchtungsmuster beleuchteten Bildinformationen, die durch die Bilderfassungsmittel (101) erhalten wurden, wenn die Fokussierungsinformationen angeben, dass das Bild im Fokus ist.

2. Biometrische Authentifizierungsvorrichtung nach Anspruch 1, wobei

die Fokussteuerungsmittel (104) dazu konfiguriert sind, in einem Suchmodus den geschätzten Subjektabstand als Referenz heranzuziehen und vor und nach der Referenz nach einer Fokusposition zu suchen, in welcher das durch die Bilderfassungsmittel (101) erhaltene Bild im Fokus ist,

wobei die Beleuchtungsmittel (305) dazu konfiguriert sind, wenn sich die Fokussteuerungsmittel (104) im Suchmodus befinden und die Fokussierungsinformationen nicht den fokussierten Zustand angeben, das Licht so zu steuern, dass die Leuchtdichte umso höher ist, je größer der Subjektabstand ist.

3. Biometrische Authentifizierungsvorrichtung nach Anspruch 1 oder 2, wobei

die geschätzten Positionsinformationen ferner Informationen enthalten, die eine Abweichung des Subjekts darstellen, und

die Beleuchtungsmittel (105) die Leuchtdichte des Lichts ferner unter Verwendung der Abweichungsinformationen der geschätzten Positionsinformationen steuern.

4. Biometrische Authentifizierungsvorrichtung nach einem der Ansprüche 1 bis 3, wobei die Beleuchtungsmittel (305) eine Verteilung von Pixelwerten der durch die Bilderfassungsmittel (101) erhaltenen Bildinformationen erhalten und die Leuchtdichte durch Vergleichen eines repräsentativen Wertes mit einem angenommenen Wert anpassen.

5. Biometrische Authentifizierungsvorrichtung nach einem der Ansprüche 1 bis 4, wobei die Beleuchtungsmittel (305) das Beleuchtungsmuster ferner unter Verwendung von Abweichungsinformationen über eine in den geschätzten Positionsinformationen enthaltene Position des Subjekts steuern, wobei das Beleuchtungsmuster darin besteht, dass eine Leuchte unter den Leuchten (2A, 2B), zu welcher hin die Position des Subjekts abweicht, ausgeschaltet wird.

6. Biometrische Authentifizierungsvorrichtung nach einem der Ansprüche 1 bis 5, ferner umfassend:

Gesichtsorientierungs-Schätzmittel (407) zum Analysieren der durch die Bilderfassungsmittel (101) erhaltenen Bildinformationen und zum Erhalten von Gesichtsorientierungs-Informationen über das Subjekt, wobei die Subjektpositions-Schätzmittel (403) den in den geschätzten Positionsinformationen enthaltenen Subjektabstand basierend auf den durch die Gesichtsorientierungs-Schätzmittel (407) erhaltenen Gesichtsorientierungs-Informationen korrigieren.

7. Biometrisches Authentifizierungsverfahren, umfassend:

Erhalten von Bildinformationen über ein biometrisch zu authentifizierendes Subjekt;

Erkennen eines Merkmalsanteils eines Gesichts aus den erhaltenen Bildinformationen und Erzeugen von Positionsinformationen über den Merkmalsanteil;

Schätzen einer räumlichen Position des Subjekts aus den erzeugten Positionsinformationen über das Merkmal und Erzeugen von geschätzten Positionsinformationen, die Subjektabstands-Informationen enthalten, welche einen Abstand zu dem Subjekt darstellen;

Bestimmen, ob ein Bild im Fokus ist oder nicht, basierend auf den erhaltenen Bildinformationen, Erzeugen von Fokussierungsinformationen, die darstellen, ob das Bild im Fokus ist oder nicht, und Steuern des Fokus von Mitteln zum Erhalten der Bildinformationen basierend auf den geschätzten Positionsinformationen; und

Steuern der Leuchtdichte eines Lichts, welches das Subjekt beleuchtet, basierend auf den geschätzten Positionsinformationen,

wobei Leuchten (2A, 2B), die an beiden Seiten einer Kamera (1) der Bilderfassungsmittel (101) angeordnet sind, zwischen dem Fall, in dem die Fokussierungsinformationen einen fokussierten Zustand angeben, und dem Fall, in dem die Fokussierungsinformationen nicht den fokussierten Zustand angeben, unterschiedlich gesteuert werden,

wobei in dem Fall, in dem die Fokussierungsinformationen den fokussierten Zustand angeben, die Beleuchtung der Leuchten (2A, 2B) gemäß einem vorbestimmten Beleuchtungsmuster gesteuert wird, und

in dem Fall, in dem die Fokussierungsinformationen nicht den fokussierten Zustand angeben, die Beleuchtung der Leuchten (2A, 2B) so gesteuert wird, dass die Leuchtdichte umso höher ist, je größer der Subjektabstand ist, und

das Verfahren ferner umfasst:

Durchführen einer biometrischen Authentifizierung unter Verwendung der erhaltenen Bildinformationen, die durch das vorbestimmte Beleuchtungsmuster beleuchtet wurden, wenn die Fokussierungsinformationen angeben, dass das Bild im Fokus ist.

8. Programm mit Anweisungen, die eine biometrische Authentifizierungsvorrichtung nach Anspruch 1 veranlassen, das Verfahren nach Anspruch 7 auszuführen.

**Revendications**

1. Appareil d'authentification biométrique comprenant :

des moyens d'obtention d'informations d'image (101) pour obtenir des informations d'image sur un sujet à authentifier biométriquement ;

des moyens de détection de repère facial (102) pour détecter une partie de repère d'un visage à partir des informations d'image obtenues par les moyens d'obtention d'informations d'image (101), et générer des informations de position concernant la partie de repère ;

un moyen d'estimation de position de sujet (103 ; 403) pour estimer une position spatiale du sujet à partir des informations de position sur le repère générées par les moyens de détection de repère facial (102), et générer des informations de position estimée qui incluent des informations de distance au sujet représentant une distance par rapport au sujet ;

un moyen de commande de mise au point (104) pour déterminer si une image est nette ou non sur la base des informations d'image obtenues par les moyens d'obtention d'informations d'image (101), générer des informations de mise au point qui représentent si l'image est nette ou non, et commander la mise au point des moyens d'obtention d'informations d'image (101), sur la base des informations de position estimée ; et

un moyen d'éclairage (305) pour commander la luminance d'une lumière qui éclaire le sujet, sur la base des informations de position estimée,

dans lequel le moyen d'éclairage (305) inclut des lumières (2A, 2B) disposées des deux côtés d'une caméra (1) des moyens d'obtention d'informations d'image (101), et le moyen d'éclairage (305) commande les lumières (2A, 2B) différemment selon le cas où les informations de mise au point représentent un état net et le cas où les informations de mise au point ne représentent pas l'état net,

dans le cas où les informations de mise au point indiquent l'état net, le moyen d'éclairage (305) commande l'éclairage des lumières (2A, 2B) selon un modèle d'éclairage prédéterminé, et

dans le cas où les informations de mise au point n'indiquent pas l'état net, le moyen d'éclairage (305) commande l'éclairage des lumières (2A, 2B) de sorte que plus la distance au sujet est grande, plus la luminance est élevée, et l'appareil d'authentification biométrique comprenant :

des moyens d'authentification biométrique (106) pour réaliser une authentification biométrique à l'aide des informations d'image éclairées par le modèle d'éclairage prédéterminé obtenues par les moyens d'obtention d'informations d'image (101), lorsque les informations de mise au point indiquent que l'image est nette.

2. Appareil d'authentification biométrique selon la revendication 1, dans lequel

le moyen de commande de mise au point (104) est configuré, dans un mode de recherche, pour adopter la distance au sujet estimée comme référence, et rechercher une position nette dans laquelle l'image obtenue par les moyens d'obtention d'informations d'image (101) est nette avant et après la référence,

le moyen d'éclairage (305) est configuré, lorsque le moyen de commande de mise au point (104) est en mode de recherche et que les informations de mise au point n'indiquent pas l'état net, pour commander la lumière de sorte que plus la distance au sujet est grande, plus la luminance est élevée.

**3.** Appareil d'authentification biométrique selon la revendication 1 ou 2, dans lequel

les informations de position estimée incluent en outre des informations représentant un écart du sujet, et
le moyen d'éclairage (105) commande la luminance de la lumière, en utilisant en outre les informations d'écart sur les informations de position estimée.

**4.** Appareil d'authentification biométrique selon l'une quelconque des revendications 1 à 3, dans lequel le moyen d'éclairage (305) obtient une distribution de valeurs de pixels des informations d'image obtenues par les moyens d'obtention d'informations d'image (101), et ajuste la luminance en comparant une valeur représentative à une valeur supposée.

**5.** Appareil d'authentification biométrique selon l'une quelconque des revendications 1 à 4, dans lequel le moyen d'éclairage (305) commande en outre le modèle d'éclairage en utilisant des informations d'écart sur une position du sujet incluse dans les informations de position estimée,
dans lequel le modèle d'éclairage veut qu'une lumière, parmi les lumières (2A, 2B), vers laquelle la position du sujet est déviée soit éteinte.

**6.** Appareil d'authentification biométrique selon l'une quelconque des revendications 1 à 5, comprenant en outre

des moyens d'estimation d'orientation de visage (407) pour analyser les informations d'image obtenues par les moyens d'obtention d'informations d'image (101), et obtenir des informations d'orientation de visage sur le sujet,
dans lequel le moyen d'estimation de position de sujet (403) corrige la distance au sujet incluse dans les informations de position estimée, sur la base des informations d'orientation de visage obtenues par les moyens d'estimation d'orientation de visage (407).

**7.** Procédé d'authentification biométrique comprenant :

l'obtention d'informations d'image sur un sujet à authentifier biométriquement ;
la détection d'une partie de repère d'un visage à partir des informations d'image obtenues, et la génération d'informations de position concernant la partie de repère ;
l'estimation d'une position spatiale du sujet à partir des informations de position générées sur le repère, et la génération d'informations de position estimée qui incluent des informations de distance au sujet représentant une distance par rapport au sujet ;
la détermination pour établir si une image est nette ou non sur la base des informations d'image obtenues, la génération d'informations de mise au point qui représentent si l'image est nette ou non, et la commande de la mise au point de moyens pour obtenir les informations d'image sur la base des informations de position estimée ; et
la commande de la luminance d'une lumière qui éclaire le sujet, sur la base des informations de position estimée, dans lequel des lumières (2A, 2B) disposées des deux côtés d'une caméra (1) des moyens d'obtention d'informations d'image (101) sont commandées différemment selon le cas où les informations de mise au point représentent un état net et le cas où les informations de mise au point ne représentent pas l'état net,
dans le cas où les informations de mise au point indiquent l'état net, la commande de l'éclairage des lumières (2A, 2B) selon un modèle d'éclairage prédéterminé, et
dans le cas où les informations de mise au point n'indiquent pas l'état net, la commande de l'éclairage des lumières (2A, 2B) de sorte que plus la distance au sujet est grande, plus la luminance est élevée, et
le procédé comprenant en outre :
la réalisation d'une authentification biométrique à l'aide des informations d'image obtenues_éclairées par le modèle d'éclairage prédéterminé, lorsque les informations de mise au point indiquent que l'image est nette.

**8.** Programme présentant des instructions qui amènent un appareil d'authentification biométrique selon la revendication 1 à exécuter le procédé selon la revendication 7.

100

101

| IMAGE INFORMATION OBTAINING MEANS |

IMAGE INFORMATION

106

| BIOMETRIC AUTHENTICATION MEANS |

102

| FACIAL LANDMARK DETECTION MEANS |

LANDMARK POSITION INFORMATION

103

| SUBJECT POSITION ESTIMATION MEANS |

FOCUS CONTROL INFORMATION

ESTIMATED POSITION INFORMATION

105

| LIGHTING MEANS |

| FOCUS CONTROL MEANS |

104

FOCUSING INFORMATION

Fig. 1

Fig. 2

Fig. 3

Fig. 4

100

101

106

IMAGE
INFORMATION
OBTAINING MEANS

IMAGE INFORMATION

BIOMETRIC
AUTHENTICATION
MEANS

FACIAL LANDMARK
DETECTION MEANS

102

LANDMARK
POSITION
INFORMATION

FOCUS CONTROL
INFORMATION

SUBJECT POSITION
ESTIMATION MEANS

103

305

ESTIMATED
POSITION
INFORMATION

LIGHTING MEANS

FOCUS CONTROL MEANS

104

FOCUSING
INFORMATION

Fig. 5

EP 4 109 871 B1

Fig. 6

21

COMPUTING MACHINE — 10

INPUT AND OUTPUT I/F — 11

BUS — 12

PROCESSOR — 13

MEMORY — 14

STORAGE DEVICE — 15

EXTERNAL I/F — 16

CAMERA — 1

LIGHT — 2

Fig. 7

**EP 4 109 871 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000260577 A
- JP 2007319174 A
- WO 2007139085 A1
- US 2017061210 A1
- US 2018276465 A1